# EUROPEAN PATENT SPECIFICATION

(11) **EP 3 565 130 B1**
(45) Date of publication and mention of the grant of the patent: **01.12.2021**
(21) Application number: 17893967.4
(22) Date of filing: 25.01.2017
(51) Int. Cl.: H04B 3/32, H04L 25/03

(54) **SIGNAL PROCESSING METHOD, APPARATUS AND SYSTEM**
SIGNALVERARBEITUNGSVERFAHREN, -VORRICHTUNG UND -SYSTEM
PROCÉDÉ, APPAREIL, ET SYSTÈME DE TRAITEMENT DE SIGNAL

(43) Date of publication of application: 06.11.2019
(73) Proprietor: Huawei Technologies Co., Ltd., Longgang District Shenzhen, Guangdong 518129 (CN)
(72) Inventor: LI, Ying, Shenzhen Guangdong 518129 (CN); WANG, Xiang, Shenzhen Guangdong 518129 (CN)
(74) Representative: Gill Jennings & Every LLP
(86) International application number: PCT/CN2017/072663
(87) International publication number: WO 2018/137193

(56) References cited:
- WO-A2-2005/109659
- CN-A- 1 505 275
- CN-A- 101 064 592
- CN-A- 103 141 033
- ITU-T G.993.5: "Self-FEXT Cancellation (Vectoring) for Use with VDSL2 Transceivers", TELECOMMUNICATION STANDARDIZATION SECTOR OF ITU, G.993.5, 1 January 2015 (2015-01-01), XP055509855,
- "G.vdsl: : MIMO for VSDL2: Requirements to allow Downstream MIMO;HH-057", ITU-T DRAFT ; STUDY PERIOD 2005-2008, INTERNATIONAL TELECOMMUNICATION UNION, GENEVA ; CH, vol. 4/15, 17 January 2005 (2005-01-17), pages 1-3, XP017529112, [retrieved on 2005-05-24]
- BT PLC: "G.VDSL: Long Reach;TD2016-06-Q4-068", ITU-T DRAFT ; STUDY PERIOD 2013-2016, INTERNATIONAL TELECOMMUNICATION UNION, GENEVA ; CH , vol. 4/15 14 September 2016 (2016-09-14), pages 1-4, XP044184771, Retrieved from the Internet: URL:http://q4sg15.itu.ch/ties/Mtgs16/Q4/20 16-06-Q4-068.docx [retrieved on 2016-09-14]

## Description

### TECHNICAL FIELD

The present invention relates to the data communication field, and specifically, to a signal processing method, an apparatus, and a system.

### BACKGROUND

A digital subscriber line (Digital Subscriber Line, DSL) is a high-speed data transmission technology for transmitting data over a phone twisted pair, for example, an unshielded twisted pair (Unshielded Twisted Pair, UTP). In a DSL system, there are a plurality of DSLs. At present, a DSL subscriber line access multiplexer (Digital Subscriber Line Access Multiplexer, DSLAM) usually provides a plurality of DSLs for a plurality of customer-premises equipments (Customer-Premises Equipment, CPE) to access. Generally, a location of DSLAM is referred to as a central office (central office, CO) or a network side; a location of CPE is referred to as a CPE side or a user side. From a perspective of a network side device, the network side device may be referred to as a local device, and correspondingly, the customer-premises equipment is referred to as a peer device, and vice versa.

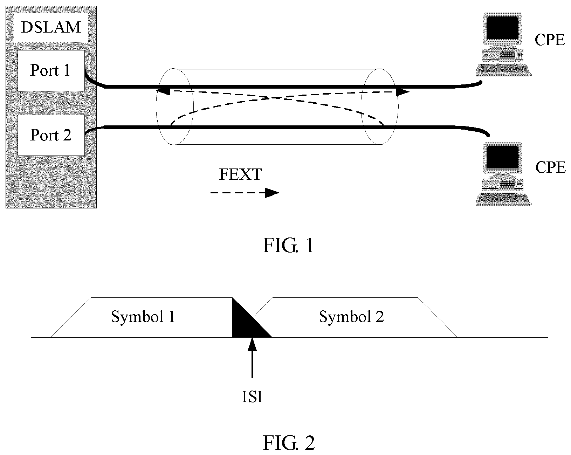

However, because of an electromagnetic induction principle, crosstalk (Crosstalk) is generated between a plurality of signals on a plurality of lines that access the DSLAM. As shown in FIG. 1, a twisted pair has quite strong far-end crosstalk (Far-end Crosstalk, FEXT) at a high frequency. For example, to eliminate noise caused by the crosstalk, a vectored (Vectored) technology may be used to eliminate FEXT on a plurality of DSLs, so as to obtain a higher signal transmission rate on lines. A line group that eliminates the FEXT by using the vectored technology is referred to as a vectored line group and the vectored line group may include all or some of lines that access the DSLAM.

In addition to the crosstalk generated between lines, inter-symbol interference (Inter-symbol Interference, ISI) also exists between adjacent symbols transmitted on a line. The inter-symbol interference is mainly caused by signal energy diffusion after a series of linear and non-linear transformations are performed on a received time domain symbol. A conventional approach is to perform time domain equalization (Time Domain Equalization, TEQ) on a signal to limit an impulse response length on a channel within a cyclic prefix (Cyclic Prefix, CP) of each symbol, so as to eliminate the inter-symbol interference. The traditionally used time domain equalization processing is independent of FEXT cancellation processing, and mutual influence is not considered between them. Therefore, in a low frequency DSL system that does not require the FEXT cancellation processing, the time domain equalization processing can relatively ideally eliminate the inter-symbol interference. However, because the FEXT cancellation processing needs to be performed on a signal on a line in a Vectored DSL system, when the time domain equalization processing and the FEXT cancellation processing are simply performed on the CPE side one after another, in some scenarios, neither of them can eliminate respective interference and crosstalk, but instead, there are more bit errors of the signal on the line, and the signal transmission rate decreases.

ITU-T G.993.5: "Self-FEXT Cancellation (Vectoring) for Use with VDSL2 Transceivers describes a transmission method that employs the coordination of line signals for reduction of crosstalk levels and improvement of performance.

G.vdsl: : MIMO for VSDL2: Requirements to allow Downstream MIMO;HH-057 describes the requirements that are needed to allow MIMO for VDSL in downstream direction.

BT PLC: "G.VDSL: Long Reach;TD2016-06-Q4-068 describes how VDSL2 might be adapted to significantly extend the coverage of broadband services in the UK.

### SUMMARY

Embodiments of the present invention provide a signal processing method according to claims 1 and 4, an apparatus according to claims 7 and 9, and a system according to claim 11 , so as to avoid a problem that improper processing of a line in a crosstalk scenario causes an error to a signal on another line. Other preferred embodiments may be found in the dependent claims.

By using the solution described the network side device sends the time domain equalization (TEQ) message to the customer-premises equipment, and then receives the feedback message from the customer-premises equipment, where the feedback message indicates that the customer-premises equipment clips an error sample but does not perform the TEQ processing on the received synchronization symbol. In the embodiments, by shielding the TEQ processing for the synchronization symbol, the network side device then performs the channel estimation and the crosstalk coefficient calculation based on the clipped error sample that does not include the TEQ processing, and then performs the crosstalk cancellation, thereby reducing a bit error rate on all lines and improving stability of a Vectored DSL system.

### BRIEF DESCRIPTION OF DRAWINGS

FIG. 1 is a schematic diagram of a network accessed by a plurality of DSLs;
FIG. 2 is a schematic diagram of inter-symbol interference between adjacent symbols according to an embodiment of the present invention;
FIG. 3 is a schematic flowchart of a signal processing method according to an embodiment of the present invention;
FIG. 4 is a schematic structural diagram of a network side device according to an embodiment of the present invention;
FIG. 5 is a schematic structural diagram of a network side processing apparatus according to an embodiment of the present invention; and
FIG. 6 is a schematic structural diagram of a customer-premises processing apparatus according to an embodiment of the present invention.

### DESCRIPTION OF EMBODIMENTS

The following describes the technical solutions in the embodiments of the present invention with reference to the accompanying drawings in the embodiments of the present invention.

First, time domain equalization processing is described. Because a time domain symbol requires a series of linear and non-linear transformations after reaching a CPE side, energy of a signal is diffused, and the diffusion causes inter-symbol interference between adjacent symbols. As shown in FIG. 2, an overlapping shadow part between a symbol 1 (Symbol 1) and a symbol 2 (Symbol 2) is the inter-symbol interference generated due to energy diffusion. To resolve this problem, a cyclic prefix CP may be added before each symbol. When a length of the CP is greater than or equal to an impulse response length of a channel, signal diffusion energy of a first symbol may be leaked only within the CP length. In addition, because information carried in the CP is useless for an entire system, after receiving a signal, a receive end may, regardless of inter-symbol interference in the CP, only normally parse symbols after the CP, thereby eliminating the inter-symbol interference. It may be learned that, in the foregoing method for eliminating the inter-symbol interference, it needs to be ensured that the CP length is greater than or equal to the impulse response length of the channel, and the time domain equalization processing limits the impulse response length of the channel within the CP length.

Theoretically, the time domain equalization processing needs to be performed on the time domain symbol after a series of linear and non-linear transformations are performed on the time domain symbol, and the time domain equalization processing is not performed only after FEXT cancellation processing. Therefore, objects of the time domain equalization processing actually include a data signal sent by a transmit end (namely, a network side) and a crosstalk signal generated in a transmission process, but the crosstalk signal is unknown and uncontrollable. When crosstalk is relatively strong, a TEQ coefficient calculated based on an industry algorithm is inaccurate. TEQ processing performed by using the inaccurate TEQ coefficient cannot ensure that channel tailing is compressed within a scope of the CP after the TEQ processing. In addition, because an excessively great CP length reduces transmission efficiency, the CP length cannot be set to be excessively great. Currently, there are already many methods for calculating a specific CP length, and details are not described herein.

If the CP length is less than the impulse response length of the channel, inter-symbol interference cannot be eliminated on the line, and for the signal with the inter-symbol interference, performing the FEXT cancellation processing causes a relatively major error. Because FEXT cancellation is joint processing on all target lines, an inaccurate signal on a line further causes an inaccurate signal on another line on which joint processing is performed. Therefore, in a Vectored DSL system, how to control the time domain equalization processing and the FEXT cancellation processing to possibly reduce impact of a strong crosstalk signal on a processing result is a problem to be resolved.

To resolve this problem, this application provides the following embodiments for controlling procedures of the time domain equalization processing and the FEXT cancellation processing, so as to avoid a case in which improper processing of a line in a strong crosstalk scenario causes an error to a signal on another line.

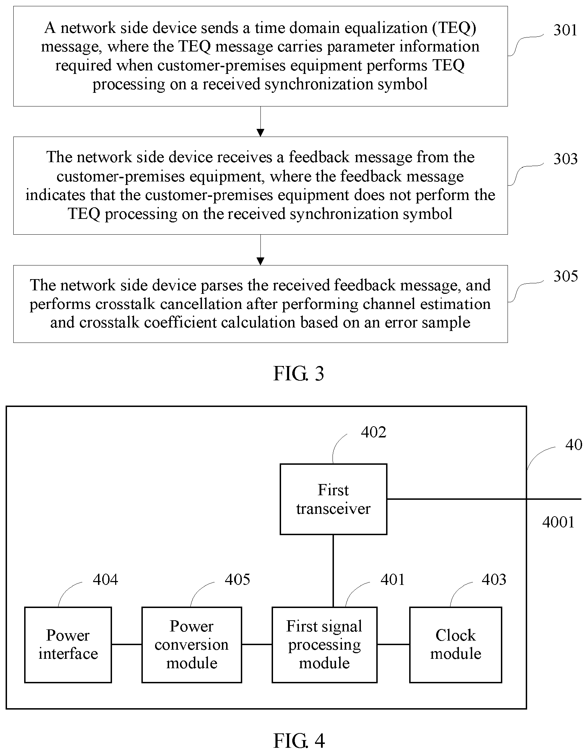

The present invention provides a signal processing method, where the method is applied to a Vectored DSL system. The Vectored DSL system includes a network side device and at least one customer-premises equipment, and the network side device and the at least one customer-premises equipment are connected by using a twisted pair. Because a role that each CPE plays in a network is similar, this embodiment is described by using the network side device and one CPE of the at least one CPE as an example. As shown in FIG. 3, a method procedure includes the following steps.

Step 301: A network side device sends a time domain equalization (TEQ) message, where the TEQ message carries parameter information required when customer-premises equipment performs TEQ processing on a received symbol. The network side device and the customer-premises equipment are connected by using a twisted pair, and the TEQ message is sent to the customer-premises equipment through the twisted pair.

The TEQ message is a general term of messages indicating that the network side device instructs the customer-premises equipment to start TEQ training. For example, the TEQ message may be an O-P-TEQ message, defined in the G.993.2 standard formulated by the International Telecommunication Union-Telecommunication Standardization Sector (ITU-T), that carries information including a parameter for representing a period symbol feature, or may be another message that carries information including a parameter for representing a cycle symbol feature. This is not limited in this embodiment of the present invention. A receive end initiates a TEQ processing procedure only when detecting the parameter for representing the period symbol feature.

The network side device sends the TEQ message to the customer-premises equipment in an initialization (Initialization) phase.

Step 303: The customer-premises equipment determines, based on length information of a twisted pair, whether to perform the TEQ processing, and sends a feedback message to the network side device. The feedback message indicates that the customer-premises equipment does not perform the TEQ processing on a received synchronization symbol. The feedback message further carries a clipped error sample (clipped error sample) for the network side device to perform channel estimation and crosstalk coefficient calculation. The clipped error sample (clipped error sample) is error sample information on which the TEQ processing is not performed by the customer-premises equipment.

The determining, based on length information of a twisted pair, whether to perform the TEQ processing includes: if a length of the twisted pair is greater than or equal to a preset threshold, the customer-premises equipment starts the TEQ coefficient training and enables the TEQ; or if a length of the twisted pair is not greater than or equal to a preset threshold, the customer-premises equipment does not start the TEQ coefficient training. The length information of the twisted pair is obtained in a line discovery (Discovery) phase.

The preset threshold may be a physical length of a line, for example, any value from 800 m to 2000 m, such as 1000 m, 1200 m, 1500 m or any data near 800 m to 2000 m; or may be a transformed electrical length, for example, any value from 20 db to 100 db (including 20 and 100); or another parameter that can represent a line length. It should be understood by persons skilled in the art that, as long as both actual length information of the twisted pair and the threshold are corresponding selected parameters, and as long as the parameters can represent the length information of the twisted pair, comparison can be performed through simple mathematical calculation. The length information of the twisted pair is not limited to a physical length of a line, an electrical length (electrical length) or a maximum quantity of subcarriers that can be carried.

Step 305: The network side device receives the feedback message from the customer-premises equipment, parses the received feedback message, and performs crosstalk cancellation after performing the channel estimation and the crosstalk coefficient calculation based on the clipped error sample.

Further, in other embodiments, after a phase (also referred to as an O-P-VECTOR2 phase) shown in step 305, the network side device and the customer-premises equipment perform fast retraining, that is, do not perform handshaking to enter an initialization (Initialization) phase again. In a retraining process, a physical layer parameter and a crosstalk coefficient reuse the previous training parameters. This provides the following benefits: In the retraining process, reusing the previous cancellation coefficient may cancel crosstalk, and then TEQ training is performed based on a normal procedure, and TEQ coefficient training is relatively accurate.

Further, in other embodiments, after the phase (the O-P-VECTOR2 phase) shown in step 305, the customer-premises equipment may determine whether to enable TEQ again. If TEQ needs to be enabled, the customer-premises equipment performs TEQ coefficient calculation and enables TEQ (which may be defined as an O-P-TEQ1 phase). This provides the following benefits: The crosstalk cancellation is performed, and after the crosstalk is completely cancelled, a received TEQ training signal does not have strong noise. In this case, the TEQ coefficient training is relatively accurate.

In the above described embodiments, in addition to connecting to the CPE by using a twisted pair, the network side device further connects to another CPE by using a twisted pair. By performing the foregoing processing, the network side device sends the time domain equalization (TEQ) message to the customer-premises equipment, and then receives the feedback message from the customer-premises equipment, where the feedback message indicates that the customer-premises equipment clips an error sample but does not perform the TEQ processing on the received synchronization symbol. In this embodiment, processing on the synchronization symbol is shielded, so that the clipped error sample does not include the inter-symbol interference ISI. Then, the network side device performs the channel estimation and the crosstalk coefficient calculation based on the clipped error sample that does not include the TEQ processing, and then performs the crosstalk cancellation, thereby reducing a bit error rate on all lines, and improving stability of a Vectored DSL system.

Generally, a structure of the network side device in the DSL system, for example, a DSLAM device is shown in FIG. 4, and includes a first signal processing module 401 and a first transceiver 402. The first transceiver 402 in the network side device is connected to the customer-premises equipment by using a twisted pair 4001.

The first signal processing module 401 is configured to manage and control another processing module in the device. Further, the first signal processing module 401 includes a vectored control entity (vectored control entity, VCE), which is configured to: control a line connected to a terminal that supports a vector mode, for example, perform processing such as FEXT cancellation; and perform various transformations and processing on a signal, including various processing such as modulation, demodulation, and transformation at a physical layer, a layer 2, or a layer 3.

The first transceiver 402 is configured to receive and send a signal through a twisted pair.

The network side device further includes supporting modules such as a clock module 403, a power interface 404, and a power conversion module 405. The clock module 403 is configured to provide a working clock for all modules in the device, to ensure synchronous processing of all the modules.

The power interface 404 is configured to connect to input power, and the power conversion module 405 is configured to convert the input power into working power of the device.

Based on the foregoing structure, this embodiment of the present invention further provides a network side device, which also includes the first signal processing module 401 and the first transceiver 402.

The first transceiver 402 is configured to send a time domain equalization (TEQ) message to customer-premises equipment, where the TEQ message carries parameter information required when the customer-premises equipment performs TEQ processing on a received synchronization symbol, the network side device and the customer-premises equipment are connected by using a twisted pair, and the TEQ message is sent to the customer-premises equipment through the twisted pair. It should be noted that, in this embodiment, the network side device sends the TEQ message to the customer-premises equipment in an initialization phase.

The first transceiver 402 is further configured to receive a feedback message from the customer-premises equipment, where the feedback message indicates that the customer-premises equipment does not perform the TEQ processing on the received synchronization symbol. The feedback message further carries a clipped error sample (clipped error sample) for the network side device to perform channel estimation and crosstalk coefficient calculation. The clipped error sample (clipped error sample) is error sample information on which the TEQ processing is not performed by the customer-premises equipment.

The first signal processing module 401 is configured to: parse the feedback message received by the transceiver, and perform crosstalk cancellation after performing the channel estimation and the crosstalk coefficient calculation based on the clipped error sample.

A network side device 40 in the foregoing embodiment may be a DSLAM device, or another network device that integrates a DSL network side processing function. An action performed by each module in the network side device is consistent with an action described in the foregoing method embodiment. Mutual reference may be made, and details are not described herein again.

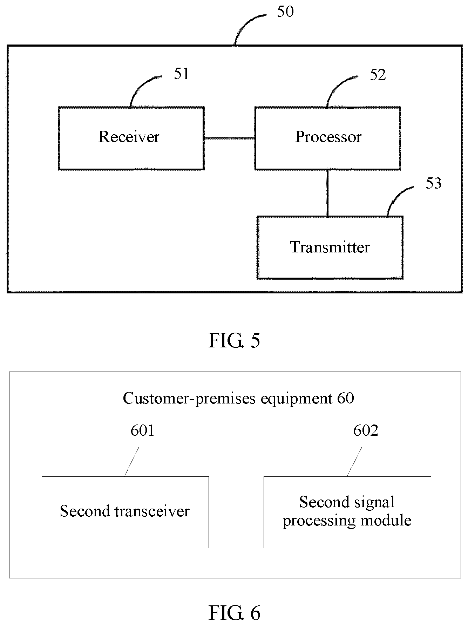

An embodiment of the present invention further provides another network side processing apparatus 50. As shown in FIG. 5, the network side processing apparatus 50 includes a receiver 51, a processor 52, and a transmitter 53.

The transmitter 53 is configured to send a time domain equalization (TEQ) message to customer-premises equipment, where the TEQ message carries parameter information required when the customer-premises equipment performs TEQ processing on a received synchronization symbol, the network side device and the customer-premises equipment are connected by using a twisted pair, and the TEQ message is sent to the customer-premises equipment through the twisted pair. It should be noted that, in this embodiment, the network side device sends the TEQ message to the customer-premises equipment in an initialization phase.

The receiver 51 is configured to receive a feedback message from the customer-premises equipment, where the feedback message indicates that the customer-premises equipment does not perform the TEQ processing on the received synchronization symbol. The feedback message further carries a clipped error sample (clipped error sample) for the network side device to perform channel estimation and crosstalk coefficient calculation. The clipped error sample (clipped error sample) is error sample information on which the TEQ processing is not performed by the customer-premises equipment.

The processor 52 is configured to: parse the feedback message received by the receiver 51, and perform crosstalk cancellation after performing the channel estimation and the crosstalk coefficient calculation based on the error sample.

The network side processing apparatus 50 may be a DSLAM device, or may be a processing unit set that combines one or more hardware and software and that is integrated into the DSLAM device.

Likewise, in this embodiment, an action performed by each module in the network side device is consistent with an action described in the foregoing method embodiment, and mutual reference may be made.

An embodiment of the present invention further provides customer-premises equipment 60, as shown in FIG. 6, including a second signal processing module 601 and a second transceiver 602.

The second transceiver 602 is configured to: receive a time domain equalization (TEQ) message from a network side device, where the TEQ message carries parameter information required when the customer-premises equipment performs TEQ processing on a received synchronization symbol, the customer-premises equipment and the network side device are connected by using a twisted pair, and the TEQ message is received through the twisted pair; and send a feedback message to the network side device.

The second processing unit 601 is configured to: determine, based on length information of the twisted pair, whether to perform the TEQ processing, and instruct the second transceiver to send the feedback message to the network side device.

The feedback message indicates that the customer-premises equipment does not perform the TEQ processing on the received synchronization symbol. The feedback message further carries a clipped error sample (clipped error sample) for the network side device to perform channel estimation and crosstalk coefficient calculation. The clipped error sample (clipped error sample) is error sample information on which the TEQ processing is not performed by the customer-premises equipment.

In another embodiment, the second processing unit 601 is further configured to: after the second transceiver receives a crosstalk coefficient delivered by the network side device, determine whether to enable TEQ, and if TEQ needs to be enabled, perform TEQ coefficient calculation and enable TEQ. To be specific, a corresponding O-P-TEQ1 phase in a step of the foregoing method embodiment is performed.

In another embodiment, that the second processing unit 601 determines, based on length information of the twisted pair, whether to perform the TEQ processing includes: if a length of the twisted pair is greater than or equal to a preset threshold, the second processing unit 601 starts TEQ coefficient training and enables TEQ; or if a length of the twisted pair is not greater than or equal to a preset threshold, the second processing unit 601 does not start the TEQ coefficient training.

In an optical embodiment, the second transceiver 602 is configured to obtain the length information of the twisted pair from a network side in a line discovery (Discovery) phase.

It should be noted that, the customer-premises processing apparatus may be a CPE device, or may be a processing unit set that combines one or more hardware and software and that is integrated into the CPE.

Likewise, in this embodiment, an action performed by each module in the network side device is consistent with an action described in the foregoing method embodiment, and mutual reference may be made.

An embodiment of the present invention further provides a twisted pair network system. A structure of the twisted pair network system is shown in FIG. 1, and includes a network side device and at least one customer-premises equipment. The network side device and the at least one customer-premises equipment are connected by using a twisted pair. The network side device is a network side processing apparatus corresponding to FIG. 4 or FIG. 5, and the customer-premises equipment is customer-premises processing apparatus corresponding to FIG. 6.

In the foregoing embodiments, it should be understood that the processor may be a central processing unit (Central Processing Unit, CPU), or may be another general purpose processor, a digital signal processor (Digital Signal Processor, DSP), an application-specific integrated circuit (Application-Specific Integrated Circuit, ASIC), or the like. The general purpose processor may be a microprocessor, or the processor may be any conventional processor or the like. The steps of the method disclosed with reference to the embodiments of the present invention may be directly performed by a hardware processor, or may be performed by using a combination of hardware and software modules in the processor.

Persons of ordinary skill in the art may understand that all or some of the steps of the method embodiments may be implemented by a program instructing related hardware. The foregoing program may be stored in a computer readable storage medium. When the program runs, the steps of the method embodiments are performed. The foregoing storage medium includes: any medium that can store program code, such as a ROM, a RAM, a magnetic disk, or an optical disc. Specifically, the foregoing network processing procedure may be implemented on a general component such as a computer or a network component that has sufficient processing capabilities, storage resources, and network throughput capabilities.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments to some or all technical features thereof, without departing from the scope of the technical solutions of the embodiments of the present invention.

## Claims

1. A signal processing method, wherein the method is applied to a vectored digital subscriber line ,Vectored DSL, system, and comprises:
sending, by a network side device, a time domain equalization ,TEQ, message, wherein the TEQ message carries parameter information required when customer-premises equipment performs TEQ processing on a received synchronization symbol, the network side device and the customer-premises equipment are connected by using a twisted pair, and the TEQ message is sent to the customer-premises equipment through the twisted pair;
**characterized by** determining (303), by the customer-premises equipment based on a length information of the twisted pair, whether to perform the TEQ processing, and sending a feedback message to the network side device, wherein the feedback message indicates that the customer-premises equipment does not perform the TEQ processing on the received synchronization symbol, the feedback message further carries a clipped error sample for the network side device to perform channel estimation and crosstalk coefficient calculation, and the clipped error sample is error sample information on which the TEQ processing is not performed by the customer-premises equipment;
receiving (305), by the network side device, the feedback message from the customer-premises equipment, and
parsing, by the network side device, the received feedback message, and performing crosstalk cancellation after performing channel estimation and crosstalk coefficient calculation based on the clipped error sample:
wherein the determining, based on a length information of the twisted pair, whether to perform the TEQ processing comprises: if a length of the twisted pair is greater than or equal to a preset threshold, the customer-premises equipment starts TEQ coefficient training and enables the TEQ processing; or if a length of the twisted pair is not greater than or equal to a preset threshold, the customer-premises equipment does not start the TEQ coefficient training.

2. The method according to claim 1, wherein the network side device sends the TEQ message to the customer-premises equipment in an initialization phase.

3. The method according to claim 1 or 2, wherein the TEQ message is an O-P-TEQ message defined in the ITU-T G.993.2 standard.

4. A signal processing method, wherein the method is applied to a vectored digital subscriber line ,Vectored DSL, system, and comprises:
Receiving (301), by a customer-premises equipment, a time domain equalization ,TEQ, message from a network side device, wherein the TEQ message carries parameter information required when the customer-premises equipment performs TEQ processing on a received synchronization symbol, the customer-premises equipment and the network side device are connected by using a twisted pair, and the TEQ message is received through the twisted pair; and
**characterized by** determining, (303) by the customer-premises equipment based on a length information of the twisted pair, whether to perform the TEQ processing, and sending a feedback message to the network side device, wherein the feedback message indicates that the customer-premises equipment does not perform the TEQ processing on the received synchronization symbol, the feedback message further carries a clipped error sample for the network side device to perform channel estimation and crosstalk coefficient calculation, and the clipped error sample is error sample information on which the TEQ processing is not performed by the customer-premises equipment;
wherein the determining, based on a length information of the twisted pair, whether to perform the TEQ processing comprises: if a length of the twisted pair is greater than or equal to a preset threshold, the customer-premises equipment starts TEQ coefficient training and enables the TEQ processing; or if a length of the twisted pair is not greater than or equal to a preset threshold, the customer-premises equipment does not start the TEQ coefficient training.

5. The method according to claim 4, wherein the customer-premises equipment starts TEQ coefficient training and enables the TEQ processing after receiving a crosstalk coefficient delivered by the network side device.

6. The method according to any one of claims 4 to 5, further comprising:
obtaining, by the customer-premises equipment, the length information of the twisted pair from the network side in a line discovery phase.

7. A network side device, comprising a first signal processing module (401) and a first transceiver (402), wherein
the first transceiver is configured to send (301) a time domain equalization ,TEQ, message to customer-premises equipment, wherein the TEQ message carries parameter information required when the customer-premises equipment performs TEQ processing on a received synchronization symbol, the network side device and the customer-premises equipment are connected by using a twisted pair, and the TEQ message is sent to the customer-premises equipment through the twisted pair;
**characterized by** being configured to receive (305) a feedback message, wherein the feedback message indicates that the customer-premises equipment does not perform the TEQ processing on the received synchronization symbol, based on a determination, by the customer-premises equipment based on a length information of the twisted pair, whether to perform the TEQ processing, the feedback message further carrying a clipped error sample so that the network side device is configured to perform channel estimation and crosstalk coefficient calculations, and the clipped error sample is error sample information on which the TEQ processing is not performed by the customer-premises equipment;
the first transceiver receives the feedback message from the customer-premises equipment, and
the first signal processing module is configured to: parse the feedback message received by the transceiver, and perform the channel estimation and the crosstalk coefficient calculation based on the clipped error sample;
wherein the determination, based on a length information of the twisted pair, whether to perform the TEQ processing comprises: if a length of the twisted pair is greater than or equal to a preset threshold, the customer-premises equipment starts TEQ coefficient training and enables the TEQ processing; or if a length of the twisted pair is not greater than or equal to a preset threshold, the customer-premises equipment does not start the TEQ coefficient training.

8. The network side device according to claim 7, wherein the network side device sends the TEQ message to the customer-premises equipment in an initialization phase.

9. Customer-premises equipment (60), comprising a second processing unit (601) and a second transceiver (602), wherein
the second transceiver is configured to: receive a time domain equalization ,TEQ, message from a network side device, wherein the TEQ message carries parameter information required when the customer-premises equipment performs TEQ processing on a received synchronization symbol, the customer-premises equipment and the network side device are connected by using a twisted pair, and the TEQ message is received through the twisted pair; and send a feedback message to the network side device; and
**characterized in that** the second processing unit is configured to: determine, (303) based on a length information of the twisted pair, whether to perform the TEQ processing, and instruct the second transceiver to send the feedback message to the network side device, wherein the feedback message indicates that the customer-premises equipment does not perform the TEQ processing on the received synchronization symbol, the feedback message further carries a clipped error sample for the network side device to perform channel estimation and crosstalk coefficient calculation, and the clipped error sample is error sample information on which the TEQ processing is not performed by the customer-premises equipment;
wherein that the second processing unit determines, based on the length information of the twisted pair, whether to perform the TEQ processing comprises: if a length of the twisted pair is greater than or equal to a preset threshold, the second processing unit starts TEQ coefficient training and enables the TEQ; or if a length of the twisted pair is not greater than or equal to a preset threshold, the second processing unit does not start the TEQ coefficient training.

10. The customer-premises equipment according to claim 9, wherein the second processing unit is further configured to: start the TEQ coefficient training and enable the TEQ processing after the second transceiver receives a crosstalk coefficient delivered by the network side device.

11. A twisted pair network system, comprising the network side device according to either of claims 7 and 8 and at least one customer-premises equipment according to any one of claims 9 to 10, wherein the network side device and the at least one customer-premises equipment are connected by using a twisted pair.

## Patentansprüche

1. Signalverarbeitungsverfahren, wobei das Verfahren auf ein vektorisiertes digitales Teilnehmerleitungssystem, vektorisiertes DSL-System, angewandt wird und umfasst:
Senden einer Zeitbereichsentzerrungsnachricht, TEQ-Nachricht, durch eine netzseitige Vorrichtung, wobei die TEQ-Nachricht Parameterinformationen trägt, die erforderlich sind, wenn eine kundenseitige Einrichtung eine TEQ-Verarbeitung an einem empfangenen Synchronisationssymbol durchführt, die netzseitige Vorrichtung und die kundenseitige Einrichtung unter Verwendung eines verdrillten Adernpaars verbunden sind und die TEQ-Nachricht über das verdrillte Adernpaar an die kundenseitige Einrichtung gesendet wird;
**gekennzeichnet durch** Bestimmen (303), durch die kundenseitige Einrichtung auf Grundlage einer Längeninformation des verdrillten Adernpaars, ob die TEQ-Verarbeitung durchgeführt werden soll, und Senden einer Rückmeldenachricht an die netzseitige Vorrichtung, wobei die Rückmeldenachricht angibt, dass die kundenseitige Einrichtung die TEQ-Verarbeitung an dem empfangenen Synchronisationssymbol nicht durchführt, die Rückmeldenachricht ferner einen ausgeschnittenen Fehlerabtastwert für die netzseitige Vorrichtung trägt, um eine Kanalschätzung und eine Berechnung des Übersprechkoeffizienten durchzuführen, und der ausgeschnittene Fehlerabtastwert eine Fehlerabtastwertinformation ist, an der die TEQ-Verarbeitung durch die kundenseitige Einrichtung nicht durchgeführt wird;
Empfangen (305) der Rückmeldenachricht von der kundenseitigen Einrichtung durch die netzseitige Vorrichtung, und
Zerlegen der empfangenen Rückmeldenachricht durch die netzseitige Vorrichtung und Durchführen einer Übersprechdämpfung nach dem Durchführen der Kanalschätzung und der Berechnung des Übersprechkoeffizienten auf Grundlage des ausgeschnittenen Fehlerabtastwerts;
wobei das Bestimmen auf Grundlage einer Längeninformation des verdrillten Adernpaars, ob die TEQ-Verarbeitung durchgeführt werden soll, umfasst: wenn eine Länge des verdrillten Adernpaars größer oder gleich einem voreingestellten Schwellenwert ist, startet die kundenseitige Einrichtung ein TEQ-Koeffiziententraining und aktiviert die TEQ-Verarbeitung;
oder wenn eine Länge des verdrillten Adernpaars nicht größer oder gleich einem voreingestellten Schwellenwert ist, startet die kundenseitige Einrichtung das TEQ-Koeffiziententraining nicht.

2. Verfahren nach Anspruch 1, wobei die netzseitige Vorrichtung die TEQ-Nachricht in einer Initialisierungsphase an die kundenseitige Einrichtung sendet.

3. Verfahren nach Anspruch 1 oder 2, wobei die TEQ-Nachricht eine O-P-TEQ-Nachricht ist, die im ITU-T-Standard G.993.2 definiert ist.

4. Signalverarbeitungsverfahren, wobei das Verfahren auf ein vektorisiertes digitales Teilnehmerleitungssystem, vektorisiertes DSL-System, angewandt wird und umfasst:
Empfangen (301) einer Zeitbereichsentzerrungsnachricht, TEQ-Nachricht, von einer netzseitigen Vorrichtung durch eine kundenseitige Einrichtung, wobei die TEQ-Nachricht Parameterinformationen trägt, die erforderlich sind, wenn die kundenseitige Einrichtung eine TEQ-Verarbeitung an einem empfangenen Synchronisationssymbol durchführt, die kundenseitige Einrichtung und die netzseitige Vorrichtung unter Verwendung eines verdrillten Adernpaars verbunden sind und die TEQ-Nachricht über das verdrillte Adernpaar empfangen wird; und
**gekennzeichnet durch** Bestimmen (303), durch die kundenseitige Einrichtung auf Grundlage einer Längeninformation des verdrillten Adernpaars, ob die TEQ-Verarbeitung durchgeführt werden soll, und Senden einer Rückmeldenachricht an die netzseitige Vorrichtung, wobei die Rückmeldenachricht angibt,
dass die kundenseitige Einrichtung die TEQ-Verarbeitung an dem empfangenen Synchronisationssymbol nicht durchführt, die Rückmeldenachricht ferner einen ausgeschnittenen Fehlerabtastwert für die netzseitige Vorrichtung trägt, um eine Kanalschätzung und eine Berechnung des Übersprechkoeffizienten durchzuführen, und der ausgeschnittene Fehlerabtastwert eine Fehlerabtastwertinformation ist, an der die TEQ-Verarbeitung durch die kundenseitige Einrichtung nicht durchgeführt wird;
wobei das Bestimmen auf Grundlage einer Längeninformation des verdrillten Adernpaars, ob die TEQ-Verarbeitung durchgeführt werden soll, umfasst: wenn eine Länge des verdrillten Adernpaars größer oder gleich einem voreingestellten Schwellenwert ist, startet die kundenseitige Einrichtung ein TEQ-Koeffiziententraining und aktiviert die TEQ-Verarbeitung;
oder wenn eine Länge des verdrillten Adernpaars nicht größer oder gleich einem voreingestellten Schwellenwert ist, startet die kundenseitige Einrichtung das TEQ-Koeffiziententraining nicht.

5. Verfahren nach Anspruch 4, wobei die kundenseitige Einrichtung das TEQ-Koeffiziententraining startet und die TEQ-Verarbeitung aktiviert, nachdem sie einen durch die netzseitige Vorrichtung bereitgestellten Übersprechkoeffizienten empfangen hat.

6. Verfahren nach einem der Ansprüche 4 bis 5, ferner umfassend:
Erlangen der Längeninformationen des verdrillten Adernpaars von der Netzseite durch die kundenseitige Einrichtung in einer Leitungserkennungsphase.

7. Netzseitige Vorrichtung, umfassend ein erstes Signalverarbeitungsmodul (401) und einen ersten Sendeempfänger (402), wobei
der erste Sendeempfänger dazu konfiguriert ist, eine Zeitbereichsentzerrungsnachricht, TEQ-Nachricht, an eine kundenseitige Einrichtung zu senden (301), wobei die TEQ-Nachricht Parameterinformationen trägt, die erforderlich sind, wenn die kundenseitige Einrichtung eine TEQ-Verarbeitung an einem empfangenen Synchronisationssymbol durchführt, die netzseitige Vorrichtung und die kundenseitige Einrichtung unter Verwendung eines verdrillten Adernpaars verbunden sind und die TEQ-Nachricht über das verdrillte Adernpaar an die kundenseitige Einrichtung gesendet wird;
**dadurch gekennzeichnet, dass** sie zum Empfangen (305) einer Rückmeldenachricht konfiguriert ist, wobei die Rückmeldenachricht angibt, dass die kundenseitige Einrichtung die TEQ-Verarbeitung an dem empfangenen Synchronisationssymbol nicht durchführt, auf Grundlage einer Bestimmung, durch die kundenseitige Einrichtung auf Grundlage einer Längeninformation des verdrillten Adernpaars, ob die TEQ-Verarbeitung durchgeführt werden soll, wobei die Rückmeldenachricht ferner einen ausgeschnittenen Fehlerabtastwert trägt, sodass die netzseitige Vorrichtung dazu konfiguriert ist, eine Kanalschätzung und eine Berechnung eines Übersprechkoeffizienten durchzuführen, und der ausgeschnittene Fehlerabtastwert eine Fehlerabtastwertinformation ist, an der die TEQ-Verarbeitung durch die kundenseitige Einrichtung nicht durchgeführt wird; der erste Sendeempfänger die Rückmeldenachricht von der kundenseitigen Einrichtung empfängt, und
das erste Signalverarbeitungsmodul konfiguriert ist zum:
Zerlegen der durch den Sendeempfänger empfangenen Rückmeldenachricht und Durchführen der Kanalschätzung und der Berechnung des Übersprechkoeffizienten auf Grundlage des ausgeschnittenen Fehlerabtastwerts;
wobei die Bestimmung auf Grundlage einer Längeninformation des verdrillten Adernpaars, ob die TEQ-Verarbeitung durchgeführt werden soll, umfasst: wenn eine Länge des verdrillten Adernpaars größer oder gleich einem voreingestellten Schwellenwert ist,
startet die kundenseitige Einrichtung ein TEQ-Koeffiziententraining und aktiviert die TEQ-Verarbeitung; oder
wenn eine Länge des verdrillten Adernpaars nicht größer oder gleich einem voreingestellten Schwellenwert ist, startet die kundenseitige Einrichtung das TEQ-Koeffiziententraining nicht.

8. Netzseitige Vorrichtung nach Anspruch 7, wobei die netzseitige Vorrichtung die TEQ-Nachricht in einer Initialisierungsphase an die kundenseitige Einrichtung sendet.

9. Kundenseitige Einrichtung (60), umfassend eine zweite Verarbeitungseinheit (601) und einen zweiten Sendeempfänger (602), wobei
der zweite Sendeempfänger konfiguriert ist zum: Empfangen einer Zeitbereichsentzerrungsnachricht, TEQ-Nachricht, von einer netzseitigen Vorrichtung, wobei die TEQ-Nachricht Parameterinformationen trägt, die erforderlich sind, wenn die kundenseitige Einrichtung eine TEQ-Verarbeitung an einem empfangenen Synchronisationssymbol durchführt, die kundenseitige Einrichtung und die netzseitige Vorrichtung unter Verwendung eines verdrillten Adernpaars verbunden sind und die TEQ-Nachricht über das verdrillte Adernpaar empfangen wird; und Senden einer Rückmeldenachricht an die netzseitige Vorrichtung; und
**dadurch gekennzeichnet, dass** die zweite Verarbeitungseinheit konfiguriert ist zum: Bestimmen (303) auf Grundlage einer Längeninformation des verdrillten Adernpaars, ob die TEQ-Verarbeitung durchgeführt werden soll, und Anweisen des zweiten Sendeempfängers, die Rückmeldenachricht an die netzseitige Vorrichtung zu senden, wobei die Rückmeldenachricht angibt, dass die kundenseitige Einrichtung die TEQ-Verarbeitung an dem empfangenen Synchronisationssymbol nicht durchführt, die Rückmeldenachricht ferner einen ausgeschnittenen Fehlerabtastwert für die netzseitige Vorrichtung trägt, um eine Kanalschätzung und eine Berechnung des Übersprechkoeffizienten durchzuführen, und der ausgeschnittene Fehlerabtastwert eine Fehlerabtastwertinformation ist, an der die TEQ-Verarbeitung durch die kundenseitige Einrichtung nicht durchgeführt wird; wobei die Bestimmung durch die zweite Verarbeitungseinheit auf Grundlage der Längeninformationen des verdrillten Adernpaars, ob die TEQ-Verarbeitung durchgeführt werden soll, umfasst: wenn eine Länge des verdrillten Adernpaars größer oder gleich einem voreingestellten Schwellenwert ist, startet die kundenseitige Einrichtung ein TEQ-Koeffiziententraining und aktiviert die TEQ-Verarbeitung; oder wenn eine Länge des verdrillten Adernpaars nicht größer oder gleich einem voreingestellten Schwellenwert ist, startet die kundenseitige Einrichtung das TEQ-Koeffiziententraining nicht.

10. Kundenseitige Einrichtung nach Anspruch 9, wobei die zweite Verarbeitungseinheit ferner konfiguriert ist zum: Starten des TEQ-Koeffiziententrainings und Aktivieren der TEQ-Verarbeitung, nachdem der zweite Sendeempfänger einen durch die netzseitige Vorrichtung bereitgestellten Übersprechkoeffizienten empfangen hat.

11. Netzsystem mit verdrillten Adernpaaren, umfassend die netzseitige Vorrichtung nach einem der Ansprüche 7 und 8 und mindestens eine kundenseitige Einrichtung nach einem der Ansprüche 9 bis 10, wobei die netzseitige Vorrichtung und die mindestens eine kundenseitige Einrichtung Geräte unter Verwendung eines verdrillten Adernpaars verbunden sind.

## Revendications

1. Procédé de traitement de signal, dans lequel le procédé est appliqué à un système de ligne d'abonné numérique vectorielle, DSL vectorielle, et comprend :
l'envoi, par un dispositif côté réseau, d'un message d'égalisation de domaine temporel, TEQ, dans lequel le message TEQ transporte les informations de paramètre requises lorsque l'équipement d'abonné exécute un traitement TEQ sur un symbole de synchronisation reçu, le dispositif côté réseau et
l'équipement d'abonné sont connectés à l'aide d'une paire torsadée, et le message TEQ est envoyé à l'équipement d'abonné par l'intermédiaire de la paire torsadée ;
**caractérisé par** la détermination (303), par l'équipement d'abonné sur la base d'informations de longueur de la paire torsadée, s'il faut exécuter le traitement TEQ, et l'envoi d'un message de retour au dispositif côté réseau, dans lequel le message de retour indique que l'équipement d'abonné n'exécute pas le traitement TEQ sur le symbole de synchronisation reçu,
le message de retour transporte en outre un échantillon d'erreur écrêté pour que le dispositif côté réseau effectue une estimation de canal et un calcul de coefficient de diaphonie,
et l'échantillon d'erreur écrêté est une information d'échantillon d'erreur sur laquelle le traitement TEQ n'est pas exécuté par l'équipement d'abonné ;
la réception (305), par le dispositif côté réseau, du message de retour de l'équipement d'abonné, et
l'analyse, par le dispositif côté réseau, du message de retour reçu, et la réalisation d'une annulation de diaphonie après avoir effectué une estimation de canal et un calcul de coefficient de diaphonie sur la base de l'échantillon d'erreur écrêté ;
dans lequel la détermination, sur la base d'informations de longueur de la paire torsadée, s'il faut exécuter ou non le traitement TEQ comprend : si une longueur de la paire torsadée est supérieure ou égale à un seuil prédéfini, l'équipement d'abonné démarre l'apprentissage du coefficient TEQ et active le traitement TEQ ;
ou si une longueur de la paire torsadée n'est pas supérieure ou égale à un seuil prédéfini, l'équipement d'abonné ne démarre pas l'apprentissage du coefficient TEQ.

2. Procédé selon la revendication 1, dans lequel le dispositif côté réseau envoie le message TEQ à l'équipement d'abonné lors d'une phase d'initialisation.

3. Procédé selon la revendication 1 ou 2, dans lequel le message TEQ est un message O-P-TEQ défini dans la norme ITU-T G.993.2.

4. Procédé de traitement de signal, dans lequel le procédé est appliqué à un système de ligne d'abonné numérique vectorielle, DSL vectorielle, et comprend :
la réception (301), par un équipement d'abonné, d'un message d'égalisation de domaine temporel, TEQ, provenant d'un dispositif côté réseau, dans lequel le message TEQ transporte les informations de paramètre requises lorsque l'équipement d'abonné exécute un traitement TEQ sur un symbole de synchronisation reçu, l'équipement d'abonné et le dispositif côté réseau sont connectés à l'aide d'une paire torsadée, et le message TEQ est reçu par l'intermédiaire de la paire torsadée ; et
**caractérisé par** la détermination, (303) par l'équipement d'abonné sur la base d'informations de longueur de la paire torsadée, s'il faut exécuter le traitement TEQ, et l'envoi d'un message de retour au dispositif côté réseau, dans lequel le message de retour indique que l'équipement d'abonné n'exécute pas le traitement TEQ sur le symbole de synchronisation reçu, le message de retour transporte en outre un échantillon d'erreur écrêté pour que le dispositif côté réseau effectue une estimation de canal et un calcul de coefficient de diaphonie,
et l'échantillon d'erreur écrêté est une information d'échantillon d'erreur sur laquelle le traitement TEQ n'est pas exécuté par l'équipement d'abonné ;
dans lequel la détermination, sur la base d'informations de longueur de la paire torsadée, s'il faut exécuter ou non le traitement TEQ comprend : si une longueur de la paire torsadée est supérieure ou égale à un seuil prédéfini, l'équipement d'abonné démarre l'apprentissage du coefficient TEQ et active le traitement TEQ ;
ou si une longueur de la paire torsadée n'est pas supérieure ou égale à un seuil prédéfini, l'équipement d'abonné ne démarre pas l'apprentissage du coefficient TEQ.

5. Procédé selon la revendication 4, dans lequel l'équipement d'abonné démarre l'apprentissage du coefficient TEQ et active le traitement TEQ après avoir reçu un coefficient de diaphonie fourni par le dispositif côté réseau.

6. Procédé selon l'une quelconque des revendications 4 et 5, comprenant en outre : l'obtention, par l'équipement d'abonné, des informations de longueur de la paire torsadée du côté réseau lors d'une phase de découverte de ligne.

7. Dispositif côté réseau, comprenant un premier module de traitement de signal (401) et un premier émetteur-récepteur (402), dans lequel
le premier émetteur-récepteur est conçu pour envoyer (301) un message d'égalisation de domaine temporel, TEQ, à l'équipement d'abonné, dans lequel le message TEQ transporte les informations de paramètre requises lorsque l'équipement d'abonné exécute un traitement TEQ sur un symbole de synchronisation reçu, le dispositif côté réseau et l'équipement d'abonné sont connectés à l'aide d'une paire torsadée, et le message TEQ est envoyé à l'équipement d'abonné par l'intermédiaire de la paire torsadée ; **caractérisé en ce qu'**il est conçu pour recevoir (305) un message de retour, dans lequel le message de retour indique que l'équipement d'abonné n'exécute pas le traitement TEQ sur le symbole de synchronisation reçu, sur la base d'une détermination, par l'équipement d'abonné sur la base d'informations de longueur de la paire torsadée, s'il faut exécuter le traitement TEQ, le message de retour transportant en outre un échantillon d'erreur écrêté de sorte que le dispositif côté réseau est conçu pour effectuer une estimation de canal et un calcul de coefficient de diaphonie, et l'échantillon d'erreur écrêté est une information d'échantillon d'erreur sur laquelle le traitement TEQ n'est pas exécuté par l'équipement d'abonné ;
le premier émetteur-récepteur reçoit le message de retour de l'équipement d'abonné, et
le premier module de traitement de signal est conçu pour :
analyser le message de retour reçu par l'émetteur-récepteur, et
effectuer l'estimation de canal et le calcul de coefficient de diaphonie sur la base de l'échantillon d'erreur écrêté ;
dans lequel la détermination, sur la base d'informations de longueur de la paire torsadée, s'il faut exécuter ou non le traitement TEQ comprend : si une longueur de la paire torsadée est supérieure ou égale à un seuil prédéfini, l'équipement d'abonné démarre l'apprentissage du coefficient TEQ et active le traitement TEQ ; ou si une longueur de la paire torsadée n'est pas supérieure ou égale à un seuil prédéfini, l'équipement d'abonné ne démarre pas l'apprentissage du coefficient TEQ.

8. Dispositif côté réseau selon la revendication 7, dans lequel le dispositif côté réseau envoie le message TEQ à l'équipement d'abonné lors d'une phase d'initialisation.

9. Équipement (60) d'abonné, comprenant une seconde unité de traitement (601) et un second émetteur-récepteur (602), dans lequel
le second émetteur-récepteur est conçu pour : recevoir un message d'égalisation de domaine temporel, TEQ, provenant d'un dispositif côté réseau, dans lequel le message TEQ transporte les informations de paramètre requises lorsque l'équipement d'abonné exécute un traitement TEQ sur un symbole de synchronisation reçu, l'équipement d'abonné et le dispositif côté réseau sont connectés à l'aide d'une paire torsadée, et le message TEQ est reçu par l'intermédiaire de la paire torsadée ; et envoyer un message de retour au dispositif côté réseau ; et **caractérisé en ce que** la seconde unité de traitement est conçue pour : déterminer (303), sur la base d'informations de longueur de la paire torsadée, s'il faut exécuter le traitement TEQ, et commander au second émetteur-récepteur d'envoyer le message de retour au dispositif côté réseau, dans lequel le message de retour indique que l'équipement d'abonné n'exécute pas le traitement TEQ sur le symbole de synchronisation reçu, le message de retour transporte en outre un échantillon d'erreur écrêté pour que le dispositif côté réseau effectue une estimation de canal et un calcul de coefficient de diaphonie, et l'échantillon d'erreur écrêté est une information d'échantillon d'erreur sur laquelle le traitement TEQ n'est pas exécuté par l'équipement d'abonné ;
dans lequel la détermination par la seconde unité de traitement, sur la base d'informations de longueur de la paire torsadée, s'il faut exécuter ou non le traitement TEQ comprend : si une longueur de la paire torsadée est supérieure ou égale à un seuil prédéfini, la seconde unité de traitement démarre l'apprentissage du coefficient TEQ et active le TEQ ; ou si une longueur de la paire torsadée n'est pas supérieure ou égale à un seuil prédéfini, la seconde unité de traitement ne démarre pas l'apprentissage du coefficient TEQ.

10. Équipement d'abonné selon la revendication 9, dans lequel la seconde unité de traitement est en outre configurée pour :
démarrer l'apprentissage du coefficient TEQ et activer le traitement TEQ après que le second émetteur-récepteur a reçu un coefficient de diaphonie fourni par le dispositif côté réseau.

11. Système de réseau à paire torsadée, comprenant le dispositif côté réseau selon l'une quelconque des revendications 7 et 8 et au moins un équipement d'abonné selon l'une quelconque des revendications 9 et 10, dans lequel le dispositif côté réseau et l'au moins un équipement d'abonné sont connectés à l'aide d'une paire torsadée.
